# EUROPÄISCHE PATENTSCHRIFT

(11) **EP 0 582 742 B1**
(45) Veröffentlichungstag und Bekanntmachung des Hinweises auf die Patenterteilung: **17.04.1996**
(21) Anmeldenummer: 92113819.4
(22) Anmeldetag: 13.08.1992
(51) Int. Cl.: E05B 47/00, F16H 25/02, F16H 19/06

(54) **Sperrwerk für eine Sicherheitstüre**
Locking device for a reinforced door
Appareil de verrouillage pour une porte blindée

(43) Veröffentlichungstag der Anmeldung: 16.02.1994
(73) Patentinhaber: KABA SCHLIESSSYSTEME AG, 8623 Wetzikon (CH)
(72) Erfinder: Wydler, Ulrich, El.-Ing. (HTL), CH-8309 Nürensdorf (CH); Pfab, Lothar, Dipl.-Ing. (FH), CH-8037 Zürich (CH)
(74) Vertreter: Puschmann, Heinz H.

(56) Entgegenhaltungen:
- DE-A- 3 910 263
- DE-U- 9 011 080
- FR-A- 2 396 217
- FR-A- 2 398 937
- GB-A- 1 065 319
- GB-A- 1 479 281
- NL-A- 6 501 557
- US-A- 2 706 912
- US-A- 3 083 579
- XEROX DISCLOSURE JOURNAL NOVEMBER/DECEMBER 1983 Bd. 8, Nr. 6, Seiten 459 - 461 THOMAS E. POTTER 'DIFFERENTIAL MOTOR SCAN DRIVE SYSTEM'

## Beschreibung

Die Erfindung bezieht sich auf ein Sperrwerk nach dem Oberbegriff des Anspruchs 1.

Aus vielen Bereichen der Sicherheitstechnik sind Verstellglieder verschiedenster Art bekannt, die mittels Elektromotoren oder anderen Antriebseinheiten wechselweise in der einen und/oder in der anderen Richtung aus der Ruhe- in die Arbeitslage und vice versa bewegt werden. Dabei kann es vorkommen, daß z.B. die Antriebseinheit selbst oder die von dieser betätigten weiteren Übertragungseinrichtungen zum Verstellglied ausfallen. Ebenso kann es vorkommen, daß die Energiezufuhr zur Antriebseinheit unterbrochen oder die Ansteuerung bzw. die Wirkungskette oder der Signalweg gestört sind und daß die Bewegung des Verstellgliedes daher nicht ausgeführt werden kann und dieses seine Aufgabe nicht zeit- bzw. weggerecht zu erfüllen vermag.

Bei Verstellgliedern im Bereich der Verschlußtechnik, z.B. bei Tür- oder Schloßriegeln, kommt noch hinzu, daß die Verschlußeinrichtungen, also Schlösser, Riegel- oder Sperrwerke, in der Regel auf der Türinnenseite, also in einem bei Störfällen auch für Reparaturen nicht zugänglichen Bereich liegen.

Zwar ist es grundsätzlich bekannt, wichtige Antriebe von derartigen Verstellgliedern mehrfach vorzusehen und durch auf getrennten Wegen eintreffende Signale gleicher oder verschiedener Art anzusteuern (redundante Anordnung), so daß bei Ausfall des jeweils einen Betätigungsweges bzw. der diesem zugeordneten Zwischenglieder das Verstellglied mit der jeweils anderen Antriebsmöglichkeit bewegt werden kann; vgl. EP 0 111 186 B1.

Dies ist relativ einfach zu bewerkstelligen, sofern der Antrieb der Verstellglieder manuell oder z.B. mittels mehrerer parallel wirkender Elektromagneten erfolgt. Sind aber vom Verstellglied größere Kräfte aufzubringen und/oder definierte Wege zurückzulegen und daher z.B. Elektromotoren oder Arbeitszylinder als Antriebseinheiten erforderlich, ergibt sich das Problem der unabhängigen Ankopplung mehrerer solcher, gegebenenfalls auch verschiedener Antriebseinheiten an das Verstellglied, zumal die Antriebseinheiten ja einerseits mit dem Verstellglied in ständiger Wirkverbindung stehen müssen, was z.B. beim Blockieren des einen von zwei im Eingriff stehenden Elektromotoren zur Einschränkung der Bewegungsmöglichkeit des Verstellgliedes führt, vergleiche DE-U-9 011 080.

Ferner ist es bei angetriebenen Verschlußeinrichtungen bekannt, dem Schloßriegel, dem als Verstellglied normalerweise ein Elektromotor zugeordnet ist, zusätzlich eine Hebelverbindung zuzuordnen, um im Störungsfalle das Schloß mechanisch von Hand betätigen zu können. Solche Konstruktionen (Notstellvorrichtungen) sind aufwendig und benötigen sehr viel Platz.

Ausgehend von der US-PS 3 767 240 ist es Aufgabe der Erfindung, eine redundante Ausbildung des Verstellantriebes für zu bewegende Verstellglieder ohne die Notwendigkeit manuellen Eingreifens zu schaffen.

Diese Aufgabe ist durch die kennzeichnenden Merkmale des Patentanspruches 1 gelöst.

Weitere Merkmale der Erfindung ergeben sich aus den Unteransprüchen.

Durch das erfindungsgemäße Sperrwerk mit einem zwei ständig mit dem Verstellglied über Übertragungsglieder und Differentialglied in Wirkverbindung stehende, wechselseitig auslösbare Antriebseinheiten aufweisen den Differentialantrieb wird auf verblüffend einfache Weise ein redundanter Antrieb gebildet, wobei die Antriebsbewegungen der Differentialantrieber auch selbstsperrend ausführbar sind.

Die Sperrwerke können wenig Raum beanspruchend ausgebildet werden, so daß diese an die Stelle bereits bestehender Anordnungen treten können und somit ein erhöhtes Maß an Betätigungs- und Funktionssicherheit erbringen.

Grundsätzlich sind Differentialantriebe aus anderen Anwendungsbereichen für die Feineinstellung der Position des Verstellgliedes bekannt Beispielsweise offenbart die FR-A-2 396 217 einen über einen Differentialantrieb antreibbaren Ventilschieber zum genanen Einstellen bzw. zum redundanten Antrieb der Ventilöffnung.

Die Erfindung ist nachstehend unter Bezugnahme auf mehrere in den Zeichnungen mehr oder minder schematisch dargestellte Ausführungsbeispiele eines Verschlußsystems näher beschrieben, ohne die Erfindung hierauf zu beschränken. Es Zeigen:
- Figur 1a: ein Kastenriegelschloß für Sicherheitstüren mit einer Antriebs-Anordnung gemäß der Erfindung in Draufsicht,
- Figur 1b: das Kastenriegelschloß nach Figur 1a im Querschnitt,
- Figur 2: eine Draufsicht auf ein zweites Ausführungsbeispiel der erfindungsgemäßen Antriebs-Anordnnung mit zwei Endlosbändern als Übertragungsglied,
- Figur 3: eine Draufsicht einer dritten Ausführung der Erfindung mit einem Verstellglied mit einem Endlosband und
- Figur 4: eine Draufsicht auf eine verschiedene Antriebseinheiten in Kombination aufweisende Ausführungsform der Erfindung.

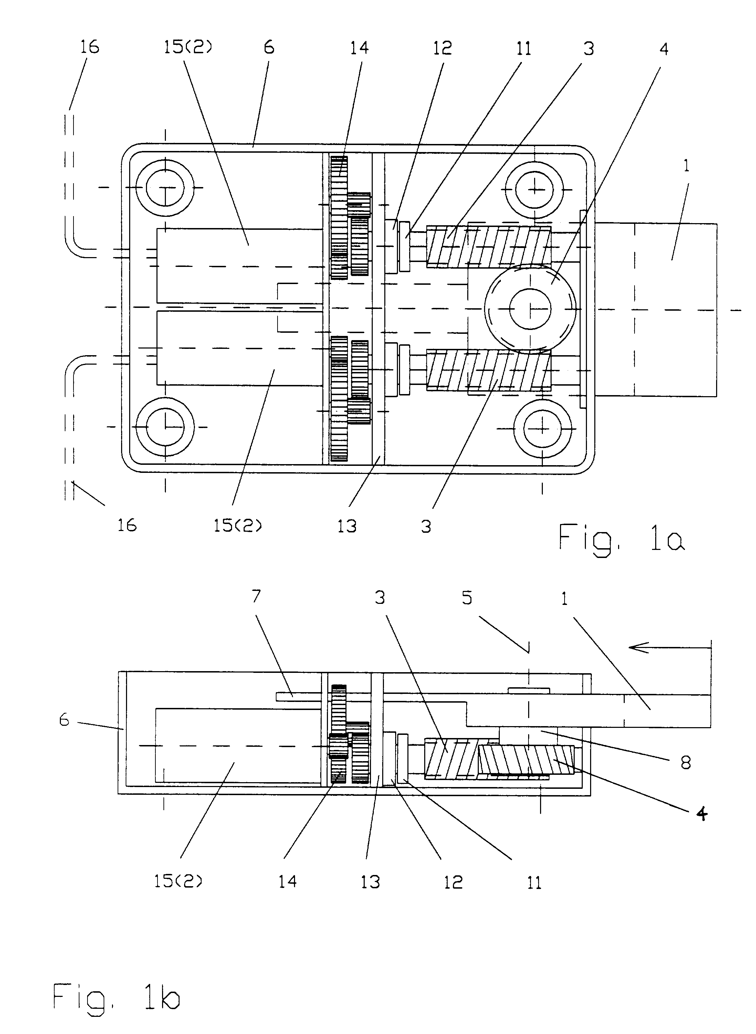

In Figur 1 ist ein sogenanntes Kastenschloß - ohne Abdeckung gezeichnet - mit in Sperrstellung befindlichem, über einen Antrieb bewegbaren Schloßriegel dargestellt, wie es in vielen Panzerschränken oder Tresortüren verwendet wird. An dem nachfolgend als Verstellglied bezeichneten Schloßriegel ist oft noch ein nicht dargestelltes Gestänge zur Betätigung eines oder mehrerer Sperrglieder angelenkt. Der Schloßriegel kann aber auch selbst die Funktion eines Sperrgliedes haben.

Zum Öffnen, also Entsperren des dargestellten Kastenschlosses ist das Verstellglied 1 mittels des Antriebes 2 in den Schloßkasten 6 des Kastenschlosses zurückzufahren, während zum Schließen, also Versperren das Verstellglied wieder nach vorn bzw. nach außen in die in Figur 1a dargestellte Lage verstellt wird. Das Verstellglied 1 ist vorn in der Gehäusewand und im hinteren Bereich des Schloßkastens mit seiner in Figur 1b angedeuteten Verlängerung 7 geführt. Längs einer den Schloßkasten senkrecht durchsetzenden Achse 5 ist eine einseitig fest eingespannte Lageraufnahme 8 für ein allgemein mit der Bezugsziffer 4 bezeichnetes, als Differentialglied arbeitendes Schnekkenzahnrad 9 mit dem Verstellglied 1 fest verbunden. Das als Differentialglied wirkende Schneckenrad 9 steht auf zwei gegenüberliegenden Seiten mit je einer von als Übertragungsglieder 3 wirkenden zylindrischen Schnecken in Eingriff. Um einen hohen Wirkungsgrad des Schneckentriebes zu gewährleisten, ist dieser nur begrenzt selbsthemmend ausgelegt, zumal bei Schlössern dies nur für das unbefugte öffnen, also das Zurückfahren des Riegels, erforderlich ist.

Um ein gewaltsames Zurückschieben des Schloßriegels, z.B. bei einem Einbruchsversuch, zu verhindern, sind den Schneckenrädern 9 Bremsscheiben 12 zugeordnet, die auf einer im Gehäusekasten befindlichen Brücke 13 angeordnet sind. Bei sehr hohen Riegelkräften werden die beiden Schnecken elastisch um einen geringen Betrag axial verschoben, wodurch jeweils deren Bund 11 mit der einseitig wirkenden Bremsscheibe 12 in Eingriff kommt.

Selbstverständlich kann die Selbsthemmung auch allein durch einen entsprechenden Steigungswinkel des vorgesehenen Schneckentriebes erreicht werden.

Wichtig ist, daß alle in Verstellrichtung auf den Schloßriegel wirkenden oder von diesem übertragenen Kräfte über die beiden Schnecken in deren Lagerung aufgenommen und von der im Schloßkasten befindlichen Brücke 13 abgestützt werden.

Hinter der Brücke 13 ist für jedes der beiden Übertragungsglieder ein zu jedem Antrieb 2 gehörendes Stirnradgetriebe 14 vorgesehen, über das jeweils ein im hinteren Teil des Schloßkastens für jede der beiden Antriebseinheiten angeordneter reversierbarer Gleichstrommotor 15 mit den Schnecken 9 getrieblich verbunden ist. Jeder Gleichstrommotor wird über eine getrennte Signalleitung 16 angesteuert.

Das vorstehend beschriebene Ausführungsbeispiel weist also zwei Antriebseinheiten mit je einem zugeordneten, drehende Antriebsbewegungen jeweils in eine in Richtung der translatorischen Bewegung des Verstellgliedes gerichtete translatorische Bewegung umsetzende Übertragungsglieder in Form von Schnecken auf, die ständig mit dem gemeinsamen, als Differentialtrieb wirkenden Zahnrad in Eingriff stehen, das um eine gegenüber dem Verstellglied ortsfeste und senkrecht zur Richtung der translatorischen Bewegung desselben verlaufende Achse unbegrenzt drehbeweglich auf dem Verstellglied gelagert ist und das bei jeder Bewegung eines der beiden Übertragungsglieder, deren parallel zu der jeweils einen oder anderen Richtung der translatorischen Bewegung des Verstellgliedes gerichtete translatorische Bewegung in eine der halben Summe dieser Bewegungen entsprechende Bewegung des Verstellgliedes umgesetzt wird.

Das im Ausführungsbeispiel dargestellte Kastenschloß ist Bestandteil eines insgesamt redundanten Verschlußsystems. Mittels einer hier nicht dargestellten Schaltung wird gewährleistet, daß beide Antriebsstränge im gleichmäßigen Wechsel arbeiten, aber unter bestimmten Bedingungen auch gleichzeitig in Funktion treten können. Die als Bestandteil des Verschlußsystems im Schloß angeordneten Überwachungseinrichtungen, mit denen die Funktion jedes der beiden Antriebsstränge kontrolliert wird, sind in der Zeichnung ebenfalls nicht dargestellt.

Sollte in einem der beiden Antriebsstränge, einschließlich der jeweils vorgeschalteten, ebenfalls redundanten Datenübertragungs- bzw. Datenauswertungseinheiten sowie der jeweils zugehörigen Energie- oder Signalübertragung ein Fehler auftreten, wird der dazu parallele Systemteil mit seinem Antriebsstrang die volle Funktion des Verschlußsystems allein übernehmen. Gleichzeitig wird in an sich bekannter Weise eine Fehlermeldung aufgegeben, so daß eine Reparatur veranlaßt werden kann.

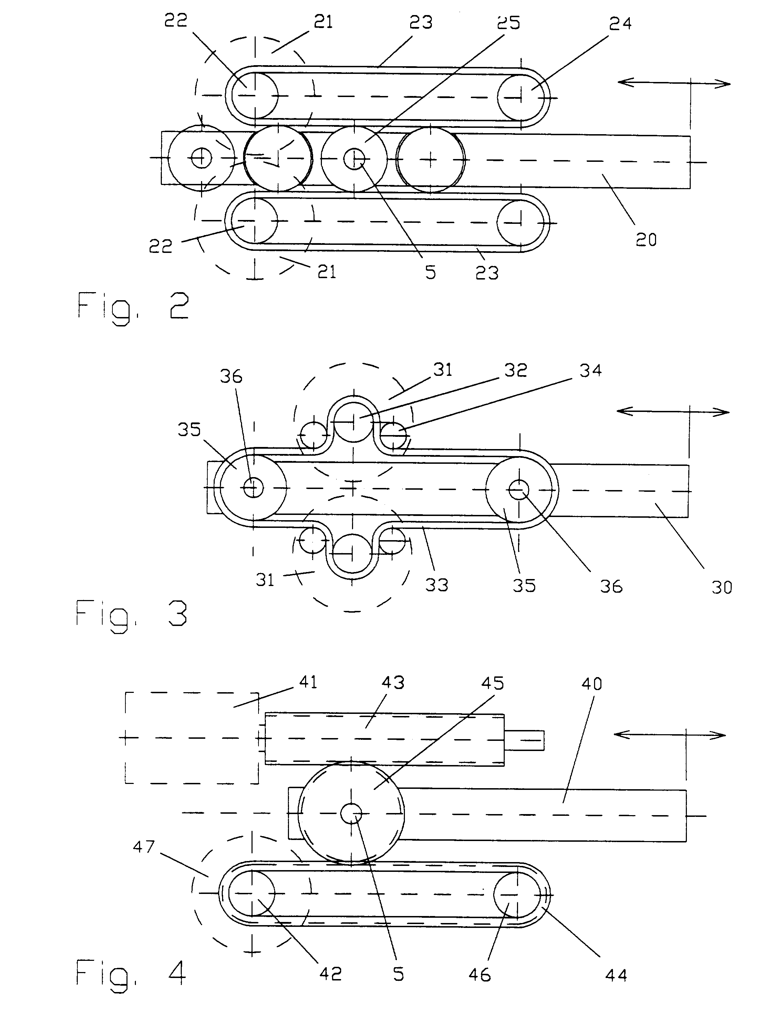

Die in Figur 2 gezeigte weitere Ausführungsform der erfindungsgemäßen Anordnung zeigt eine ebenfalls symmetrische Anordnung von Antriebseinheiten auf. Als Antriebseinheiten sind hier Schrittmotoren 21 mit ausreichendem Selbsthaltemoment und einem entsprechenden - in der Zeichnung nicht dargestellten - Getriebe vorgesehen, die mit je einer zugeordneten Riemenscheibe 22 mit den zum Übertragungsglied 3 gehörenden Endlosbändern 23 in Wirkverbindung stehen, welche zwischen der angetriebenen 22 und der nicht angetriebenen Riemenscheibe 24 aufgespannt sind. Das Verstellglied 20 trägt bei dieser Ausführung mehrere als Differentialglieder 4 wirkende Scheiben 25, die von den Endlosbändern durch Reibungsschluß mitgenommen werden. Vorteilhaft ist bei dieser Ausführung u.a. der große, von der Länge der Übertragungsglieder 23 relativ unabhängige Verstellweg des Verstellgliedes.

Bei der Ausführungsform nach Figur 3 ist ein Endlosband 33 als Bestandteil beider Übertragungsglieder mittels zusätzlicher Umlenkrollen 34 zwischen den als Differentialgliedern 4 wirkenden Scheiben 35 einerseits und den beiden angetriebenen Riemenscheiben 32 andererseits aufgespannt. Die Antriebsmotoren beider Antriebsstränge 31 sind jeweils mit selbsttätig wirkenden elektrischen oder mechanischen - in der Zeichnung nicht dargestellten - Bremsvorrichtungen verbunden, die ein unbeabsichtigtes Zurücklaufen des jeweils anderen Antriebsstranges verhindern.

Wird hierbei der Durchmesser der an dem Verstellglied 30 auf dort feststehenden Achsen 36 drehbaren Differentialglieder 4 bzw. 35 im Verhältnis zum Durchmesser der angetriebenen Riemenscheiben 32 groß genug gewählt, kann auf ein zusätzliches Getriebe im Antriebsstrang verzichtet werden, zumal in leicht abgewandelter Ausführung das Endlosband ja auch mit seiner Außenseite die angetriebenen Riemenscheiben 32 umschlingen kann.

Die Ausführungsform nach Figur 4 zeigt eine Kombination zweier verschieden ausgebildeter Übertragungsglieder.

Das auf dem Verstellglied 40 an fester Stelle drehbare Differentialglied ist hier ein schrägverzahntes Rad 45, welches auf einer Seite mit einer entsprechenden, als Übertragungsglied wirkenden Schneckenwelle 43, und auf der Gegenseite mit einem außenverzahnten, ebenfalls als Übertragungsglied wirkenden Endloszahnriemen 44 in Eingriff steht, der zwischen einer angetriebenen Riemenscheibe 42 und einer mitlaufenden Riemenscheibe 46 aufgespannt ist. Zwischen den artverschiedenen Antriebsmotoren 41 und 47 und den Übertragungsgliedern 43 bzw. 44 sind der Drehmomentübertragung dienende - in der Zeichnung nicht dargestellte - Rädergetriebe vorgesehen.

Durch die form- und kraftschlüssige und damit definierte Kraft- bzw. Bewegungsweitergabe der Übertragungsglieder 43 und 44 auf das Differentialglied wird eine verlustfreie Proportionalität zwischen Größe des Antriebssignals und Größe des Verstellweges gewährleistet.

## Patentansprüche

1. Sperrwerk (6) für eine Sicherheitstüre, insbesondere für eine Panzerschrank- oder Tresortüre, mit mindestens einem motorisch angetriebenen, aus einer die Sicherheitstüre entsperrenden Ausgangslage in eine die Sicherheitstüre sperrenden Endlage und umgekehrt beweglich gelagerten Verstellglied (1, 20, 30, 40) zum Schließen bzw. Öffnen des Sperrwerkes (6), dadurch gekennzeichnet, daß das Verstellglied (1, 20, 30, 40) an einem redundanten Antrieb über ein Differentialgetriebe angeschlossen ist, das mit zwei Antriebseinheiten (2) zusammenwirkt und dessen über Übertragungsglieder (3, 23, 33, 43) angetriebenes Differentialglied (4, 25, 35, 45) auf dem Verstellglied (1, 20, 30, 40) angeordnet ist, das sowohl durch die eine als auch durch die andere Antriebseinheit (2) über seinen gesamten Verstellweg von der Ausgangslage in die Endlage und umgekehrt bewegbar ist.

2. Sperrwerk nach Anspruch 1, **dadurch gekennzeichnet**, daß beide Antriebseinheiten (2) Drehantriebe (15, 21, 31) sind und die Übertragungsglieder (3, 23, 33, 43) in Zusammenwirken mit dem Differentialglied (4, 25, 35, 45) die Drehbewegung der Drehantriebe (15, 21, 31) in eine translatorische Bewegung des Verstellgliedes (1, 20, 30, 40) umsetzen.

3. Sperrwerk nach Anspruch 1 und 2, **dadurch gekennzeichnet**, daß zumindest einer Antriebseinheit (2) als Übertragungsglied eine Schnecke (3, 43) zugeordnet ist, die mit dem als Schneckenrad (4, 45) ausgebildeten Differentialglied in ständigem Eingriff steht.

4. Sperrwerk nach einem der vorangehenden Ansprüche, **dadurch gekennzeichnet**, daß zumindest einer Antriebseinheit (2) als Übertragungsglied ein Endlosband (23, 33, 44) zugeordnet ist, das mit dem als Mitnehmerrad (25, 35, 45) ausgebildeten Differentialglied in ständigem Eingriff steht.

5. Sperrwerk nach Anspruch 1, 2 und 4, **dadurch gekennzeichnet**, daß den Antriebseinheiten (2) jeweils ein um eine senkrecht zur Richtung der translatorischen Bewegung des Verstellgliedes (30) verlaufende Achse drehbares Antriebsrad (32) zugeordnet ist und das Differentialglied zwei in einem mindestens gleich der Wegstrecke des Verstellgliedes (30) bemessenen wirksamen Abstand hintereinander ortsfest und drehbeweglich auf dem Verstellglied (30) gelagerten Laufrädern (35) aufweist und die Übertragungsglieder durch ein die Laufräder (35) verbindenden und zwischen den Antriebsrädern (32) angeordneten und ständig mit deren Mantelflächen in Eingriff stehenden Endlosband (33) gebildet werden.

6. Sperrwerk nach einem der vorangehenden Ansprüche, **dadurch gekennzeichnet,** daß mindestens einer der beiden Antriebseinheiten (2) oder eines der Übertragungsglieder (3, 43) mit selbstätig wirkenden oder zuschaltbaren Ein- oder Zweiweg-Rutsch-, Rast- oder Freilaufkupplungen verbunden ist.

7. Sperrwerk nach den Ansprüchen 1 bis 3 und 6, **dadurch gekennzeichnet**, daß bei mindestens einer der Schnecken (3) in der Nähe einer oder beider Lagerstellen als Teile einer einseitig wirkenden Kupplung oder Bremse wirkende Formelemente oder entsprechende Bauteile (11, 12) angeordnet sind, die bei axialer Belastung bzw. Verschiebung der Schnecke (3) in eine Bewegungsrichtung des Verstellgliedes (1) mit den dazugehörigen Gegenstücken auf der Festlagerseite in Eingriff kommen.

8. Sperrwerk nach einem der Ansprüche 1 bis 5, **dadurch gekennzeichnet**, daß jedes Endlosband (23, 33) als ein- oder zweiseitiges Zahnband, als Endloskette oder als Endlosriemen, und das Mitnehmerrad (25, 35, 45) als Kettenrad, Zahnrad oder Reibrad ausgebildet ist.

9. Sperrwerk nach einem der vorangehenden Ansprüche, **dadurch gekennzeichnet**, daß die Funktion jedes aus Antriebseinheit (2), Übertragungsglied (3, 23, 33, 43), Differentialglied (4, 25, 35, 45) und Verstellglied (1, 20, 30, 40) bestehenden Antriebsstranges über eine zugeordnete Überwachungseinrichtung störungsüberwacht ist, und seine Funktion und/oder Nichtfunktion gesondert angezeigt wird.

10. Sperrwerk nach einem der vorangehenden Ansprüche, **dadurch gekennzeichnet**, daß die Antriebseinheiten (2) von ungleicher Bauart und Antriebsweise sind.

## Claims

1. Locking mechanism for a security door, particularly for strongroom or safe doors, with at least one motor driven adjusting member (1, 20, 30, 40) mounted so as to move from a security door-unlocking starting position into a security door-locking end position and vice versa, for closing or opening the locking mechanism (6), characterized in that the adjusting member (1, 20, 30, 40) is connected to a redundant drive by means of a differential gear, which cooperates with two drive units (2) and whose differential member (4, 25, 35, 45) driven by means of transmission members (3, 23, 33, 43) is located on the adjusting member (1, 20, 30, 40), which is movable over its entire adjustment path by each of the drive units (2) from the starting position into the end position and vice versa.

2. Locking mechanism according to claim 1, characterized in that both drive units (2) are rotary drives (15, 21, 31) and the transmission members (3, 23, 33, 43) in conjunction with the differential member (4, 25, 35, 45) transform the rotary movement of the rotary drives (15, 21, 31) into a translatory movement of the adjusting member (1, 20, 30, 40).

3. Locking mechanism according to claim 1 and 2, characterized in that with at least one drive unit (2) is associated as the transmission member a worm (3, 43), which is in constant engagement with the differential member constructed as the worm gear (4, 45).

4. Locking mechanism according to one of the preceding claims, characterized in that with at least one drive unit (2) is associated as the transmission member a continuous belt (23, 33, 44), which is in constant engagement with the differential member constructed as a driving wheel.

5. Locking mechanism according to claim 1, 2 and 4, characterized in that with the drive units (2) is in each case associated a drive gear (32) rotatable about an axis running perpendicular to the direction of the translatory movement of the adjusting member (30) and the differential member has two wheels (35) mounted in successively fixed and rotary manner on the adjusting member (30) with an effective spacing at least equal to the path distance of the adjusting member (30) and the transmission members are formed by a continuous belt (33) connecting the wheels (35), positioned between the drive gears (32) and in constant engagement with their circumferential surfaces.

6. Locking mechanism according to one of the preceding claims, characterized in that at least one of the two drive units (2) or one of the transmission members (3, 43) is connected to automatically acting or engageable one or two-way slip, stop or freewheel clutches.

7. Locking mechanism according to claims 1 to 3 and 6, characterized in that for at least one of the worms (3) are provided shape elements or corresponding components (11, 12) as parts of a one-sided acting clutch or brake in the vicinity of one or both bearing points and which in the case of axially loading or displacement of the worm (3) in one movement direction of the adjusting member (1) engage with the associated counterparts on the fixed bearing side.

8. Locking mechanism according to one of the claims 1 to 5, characterized in that each continuous belt (23, 33) is constructed as a one or two-sided toothed belt, as an endless chain or as an endless belt and the driving wheel (25, 35, 45) is constructed as a sprocket, a toothed wheel or a friction wheel.

9. Locking mechanism according to one of the preceding claims, characterized in that the function of each drive strand comprising a drive unit (2), transmission member (3, 23, 33, 43), differential member (4, 25, 35, 45) and adjusting member (1, 20, 30, 40) is fault-monitored by means of an associated monitoring device and its function and/or nonfunction is separately indicated.

10. Locking mechanism according to one of the preceding claims, characterized in that the drive units (2) do not have the same construction and drive procedure.

## Revendications

1. Mécanisme de verrouillage (6) pour une porte de sécurité, en particulier pour une porte d'armoire blindée ou de coffre-fort, comportant au moins un organe réglable en position (1, 20, 30, 40), entraîné par moteur, monté de façon à se déplacer d'une position initiale déverrouillant la porte de sécurité dans une position finale verrouillant la porte de sécurité, et inversement, pour fermer ou ouvrir le mécanisme de verrouillage (6), caractérisé en ce que l'organe réglable (1, 20, 30, 40) est raccordé à un entraînement redondant, par l'intermédiaire d'un réducteur différentiel, qui agit en coordination avec deux unités d'entraînement (2) et dont l'organe différentiel (4, 25, 35, 45), entraîné par des organes de transmission (3, 23, 33, 43), est disposé sur l'organe réglable (1, 20, 30, 40), qui peut se déplacer, sur toute sa course de réglage, aussi bien par l'action de l'une que de l'autre des unités d'entraînement (2), de sa position initiale dans sa position finale, et inversement.

2. Mécanisme de verrouillage suivant la revendication 1, caractérisé en ce que les deux unités d'entraînement (2) sont des entraînements rotatifs (15, 21, 31) et en ce que les organes de transmission (3, 23, 33, 43), agissant en coordination avec l'organe différentiel (4, 25, 35, 45), transforment le mouvement de rotation des entraînements rotatifs (15, 21, 31) en un mouvement de translation de l'organe réglable (1, 20, 30, 40).

3. Mécanisme de verrouillage suivant la revendication 1 ou la revendication 2, caractérisé en ce qu'à au moins une unité d'entraînement (2) est associée, comme organe de transmission, une vis sans fin (3, 43) qui engrène constamment avec l'organe différentiel réalisé sous la forme d'une roue (4, 45) pour vis sans fin.

4. Mécanisme de verrouillage suivant l'une des revendications précédentes, caractérisé en ce qu'à l'une au moins des unités d'entraînement (2), est associée, comme organe de transmission, une bande sans fin (23, 33, 44), qui engrène constamment avec l'organe différentiel, réalisé sous la forme d'une roue d'entraînement (25, 35, 45).

5. Mécanisme de verrouillage suivant la revendication 1, la revendication 2 et la revendication 4, caractérisé en ce qu'à chacune des unités d'entraînement (2), est associé une roue d'entraînement (32) pouvant tourner autour d'un axe dirigé perpendiculairement à la direction du mouvement de translation de l'organe réglable (30), et que l'organe différentiel présente deux roues (35) montées tournantes sur l'organe réglable (30), et placées en position fixe l'une derrière l'autre à une distance efficace égale à la course de l'organe réglable (30) et en ce que les organes de transmission sont formés par une bande sans fin (33), reliant les roues tournantes (35) et disposée entre les roues d'entraînement (32), et constamment entraînée par la surface externe de ces dernières.

6. Mécanisme de verrouillage suivant l'une des revendications précédentes, caractérisé en ce qu'au moins l'une des deux unités d'entraînement (2) ou un des organes de transmission (3, 43) est relié à des accouplements à friction unidirectionnels ou bidirectionnels, ou à des accouplements à encliquètement, ou à des accouplements à roue libre, actionnés ou enclenchés automatiquement.

7. Mécanisme de verrouillage suivant les revendications 1 à 3 et la revendication 6, caractérisé en ce que, dans le cas d'au moins l'une des vis sans fin (3), au voisinage de l'un ou des deux points de paliers, sont disposés des organes moulés, ou des pièces de construction correspondantes (11, 12), qui agissent comme pièces d'un accouplement ou d'un frein agissant sur un côté, et qui, dans le cas où on exerce une charge ou un coulissement axial de la vis sans fin (3) dans une direction de mouvement de l'organe réglable (1), viennent en prise avec les contre-pièces associées, situées du côté du palier fixe.

8. Mécanisme de verrouillage suivant l'une des revendications 1 à 5, caractérisé en ce que chaque bande sans fin (23, 33) est réalisée sous la forme d'une bande crantée sur une face ou sur ses deux faces, sous la forme d'une chaîne sans fin ou sous la forme d'une courroie sans fin, et que la roue d'entraînement (23, 35, 45) est réalisée sous la forme d'une roue de chaîne, d'une roue dentée, ou d'une roue à friction.

9. Mécanisme de verrouillage suivant l'une des revendications précédentes, caractérisé en ce que le fonctionnement de chaque ligne d'entraînement constituée d'une unité d'entraînement (2), d'un organe de transmission (3, 23, 33, 43) et d'un organe réglable (1, 20, 30, 40), est surveillé, du point de vue incident, par un dispositif de surveillance associé, et son fonctionnement et/ou son non-fonctionnement sont indiqués avec un affichage spécial.

10. Mécanisme de verrouillage suivant l'une des revendications précédentes, caractérisé en ce que les unités d'entraînement (2) sont de type de construction et de type d'entraînement non identiques.
